# EUROPEAN PATENT APPLICATION

(11) **EP 1 455 142 A1**
(43) Date of publication of application: **08.09.2004**
(21) Application number: 01275011.3
(22) Date of filing: 14.12.2001
(51) Int. Cl.: F24F 11/02

(54) **AIR CONDITIONER**

(71) Applicant: MITSUBISHI DENKI KABUSHIKI KAISHA, Tokyo 100-8310 (JP)
(72) Inventor: NAGANO, K., c/o Mitsubishi Electr. Engin. Co. Ltd, Chiyoda-ku, Tokyo 100-0004 (JP); SHIDA, Y., c/o Mitsubishi Denki Kabushiki Kaisha, Chiyoda-ku, Tokyo 100-8310 (JP); MITSUSHIMA, K., c/o Mitsubishi Denki Kabushiki K., Chiyoda-ku, Tokyo100-8310 (JP)
(74) Representative: Godwin, Edgar James
(86) International application number: PCT/JP2001/010971
(87) International publication number: WO 2003/052326

(57) **Abstract**

An air conditioner is provided with an outdoor unit designed for multiple-unit system which is equipped with a volume controllable compressor, a refrigerant flow rate control unit connected to the outdoor unit, and a single or multiple indoor units designed for one-to-one system which are connected to the refrigerant flow rate control unit. The outdoor unit and the indoor unit are provided with no flow regulators. The refrigerant flow rate control unit is provided with a means of communication with the indoor unit and a flow regulator for the indoor unit. Then, the refrigerant flow rate control unit collects the operating information of the indoor unit and controls the flow regulator so as to control the flow of refrigerant for distribution at an appropriate rate to the indoor unit. The refrigerant flow rate control unit is also provided with a means of communication with the outdoor unit and controls the operating frequency of the compressor in the outdoor unit so as to supply the indoor unit with refrigerant at a flow rate required.

## Description

### Technical Field

The present invention relates to an air conditioner composed of an outdoor unit, a refrigerant flow rate control unit and a single or multiple indoor units.

### Background Art

With a conventional air conditioner composed only of an outdoor unit and a single or multiple indoor units, the outdoor unit and the single or multiple indoor units are equipped with flow regulators to control the flow rate of refrigerant. In the case of a multiple-unit air conditioner composed of an outdoor unit, a refrigerant flow rate control unit which is connected to the outdoor unit, and a single or multiple indoor units which are connected to the refrigerant flow rate control unit, the outdoor unit and the indoor units are dedicated units which are designed for multiple-unit system.

Conventional multiple-unit air conditioners are composed each of a dedicated outdoor unit and a dedicated indoor unit, and even a dedicated refrigerant flow rate control unit depending on the system. This has boosted the cost of the system. This also made it difficult to use an indoor unit designed for one-to-one system, in which a one-to-one correspondence is established between an outdoor unit and an indoor unit, in the multiple-unit air conditioner. According to the present invention, however, existing indoor units which are designed for one-to-one system may be used in the multiple-unit air conditioner, thereby implementing air conditioners at low cost.

Taking the case, for instance, where air conditioners were developed in separate departments for home products and for large-scale office products, the air conditioners may use different communication systems from each other from the result of development processes and the like. In general, air conditioners for home use cost less than large-scale air conditioners for office use. Given these factors, a multiple-unit air conditioner may be formed by connecting an outdoor unit for large-scale office air conditioner which is equipped with no flow regulator to a refrigerant flow rate control unit and also connecting a signal or multiple indoor units for home air conditioner which are equipped with no flow regulators to the refrigerant flow rate control unit. In this case, if the refrigerant flow rate control unit has a means of communication with the outdoor unit of the large-scale office air conditioner and a means of communication with the indoor unit of the home air conditioner, then the multiple-unit air conditioner may be implemented at low cost.

### Disclosure of the Invention

An air conditioner according to this invention may be characterized by including,
at least one indoor unit;
an outdoor unit, which controls a flow rate of refrigerant to be supplied to the indoor unit; and
a refrigerant flow rate control unit, which controls the outdoor unit and the indoor unit;
wherein the refrigerant flow rate control unit may include,
an indoor communicating section, which communicates information with the indoor unit,
an outdoor communicating section, which communicates information with the outdoor unit,
at least one flow regulator, which regulates the flow rate of refrigerant to be supplied to the indoor unit, and
a refrigerant flow rate control section, which obtains an operating status of the indoor unit through the indoor communicating section, generates refrigerant flow rate information about the flow rate of refrigerant to be supplied to the indoor unit based on the operating status, controls the flow regulator based on the refrigerant flow rate information, and notifies the outdoor unit of the refrigerant flow rate information through the outdoor communicating section, and
wherein the outdoor unit may control the flow rate of refrigerant based on the refrigerant flow rate information.

It is characterized that the outdoor unit may be designed for multiple-unit system, in which a single outdoor unit deals with a plurality of indoor units, and the indoor unit may be designed for one-to-one system, in which a single outdoor unit deals with a single indoor unit.

It is characterized that the outdoor unit may be provided with an outdoor unit communication section, which is designed for the multiple-unit system, and the indoor unit may be provided with an indoor unit communication section, which is designed for the one-to-one system,
wherein the outdoor communicating section may be provided with a communication procedure for the outdoor unit communication section, and the indoor communicating section may be provided with a communication procedure for the indoor unit communication section.

The air conditioner may be characterized by including,
a plurality of indoor units; and
a plurality of flow regulators provided for the plurality of indoor units,
wherein the refrigerant flow rate control unit may be characterized by obtaining the operating status of each of the indoor units through the indoor communicating section, determining the flow rate of refrigerant to be distributed to the each of the indoor units based on the operating status obtained of the each of the indoor units, and controlling the plurality of flow regulators based on the flow rate of refrigerant determined.

It is characterized that the outdoor unit may be provided with a first system communication section, which uses a first communication system, and the indoor unit may be provided with a second system communication section, which uses a second communication system, which uses a system different from that used by the first communication system,
wherein the outdoor communicating section may be provided with a communication procedure designed for the first system communication section, and the indoor communicating section may be provided with a communication procedure designed for the second system communication section.

An air conditioner according to this invention may be characterized by including,
an outdoor unit, which is equipped with a compressor for controlling a flow rate of refrigerant;
a plurality of refrigerant flow rate control units connected to the outdoor unit; and
a plurality of indoor units, each of which is connected to one of the plurality of refrigerant flow rate control units,
wherein the outdoor unit may obtain operating information of the plurality of indoor units through the plurality of refrigerant flow rate control units, control the compressor based on the operating information obtained, generate distribution information about a flow rate of refrigerant to be supplied to the plurality of refrigerant flow rate control units, and notify the plurality of refrigerant flow rate control units of the distribution information, and
wherein the plurality of refrigerant flow rate control units may include,
a plurality of flow regulators for regulating a flow rate of refrigerant to be supplied to the plurality of indoor units, and
a refrigerant flow rate distribution section for receiving the distribution information from the outdoor unit, and controlling the plurality of flow regulators based on the distribution information.

It is characterized that the outdoor unit may be provided with an outdoor unit communication section designed for multiple-unit system, the plurality of indoor units may be provided with a plurality of indoor unit communication sections designed for one-to-one system, and the plurality of refrigerant flow rate control units may include,
at least one outdoor communicating section, which is provided with a communication procedure for communicating with the outdoor unit communication section, and
at least one indoor communicating section, which is provided with a communication procedure for communicating with the plurality of indoor communicating sections.

### Brief Description of Drawings

Fig. 1 is a simplified diagram illustrating a system configuration of a multiple-unit air conditioner according to a first embodiment;
Fig. 2 shows a control mechanism of the multiple-unit air conditioner according to the first embodiment;
Fig. 3 is a simplified diagram illustrating a system configuration of a multiple-unit air conditioner according to a second or third embodiment;
Fig. 4 shows a control mechanism of the multiple-unit air conditioner according to the second embodiment; and
Fig. 5 shows a control mechanism of the multiple-unit air conditioner according to the third embodiment.

### Best Mode for Carrying out the Invention

### Embodiment 1.

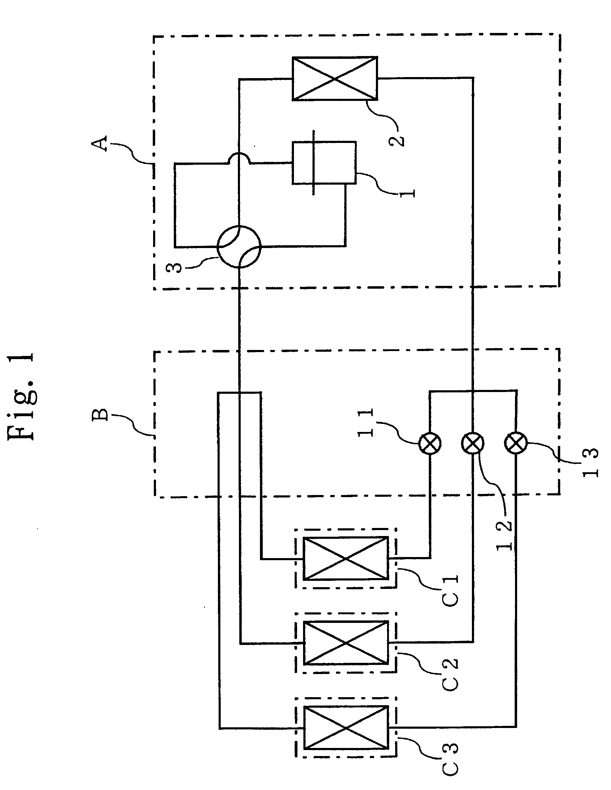

Fig. 1 is a simplified illustration of a system configuration of an air conditioner according to a first embodiment.

With referring to Fig. 1, a reference sign A denotes an outdoor unit which is designed for multiple-unit system, a reference sign B denotes a refrigerant flow rate control unit, reference signs C1, C2, C3 denote indoor units which are designed for one-to-one system. In addition, a reference numeral 1 denotes a compressor which is capable of controlling the volume of refrigerant to be supplied to the indoor units. A reference numeral 2 denotes an outdoor heat exchanger, a reference numeral 3 denotes a four way valve, and reference numerals 11, 12, 13 denote flow regulators. The compressor 1 controls the rate of flow of refrigerant by controlling the operating frequency. The flow regulators 11, 12, 13 regulate the flow rate of refrigerant to be supplied to the respective indoor units.

According to this specification, it is defined that the multiple-unit system is a system in which a single outdoor unit deals with multiple indoor units and that the one-to-one system is a system in which a single outdoor unit deals with a single indoor unit in a one-to-one correspondence.

The outdoor unit A and the indoor units C1, C2, C3 are equipped with no flow regulators. The flow rate of refrigerant for distribution to the respective indoor units C1, C2, C3 is controlled by flow regulators provided in the refrigerant flow rate control unit B.

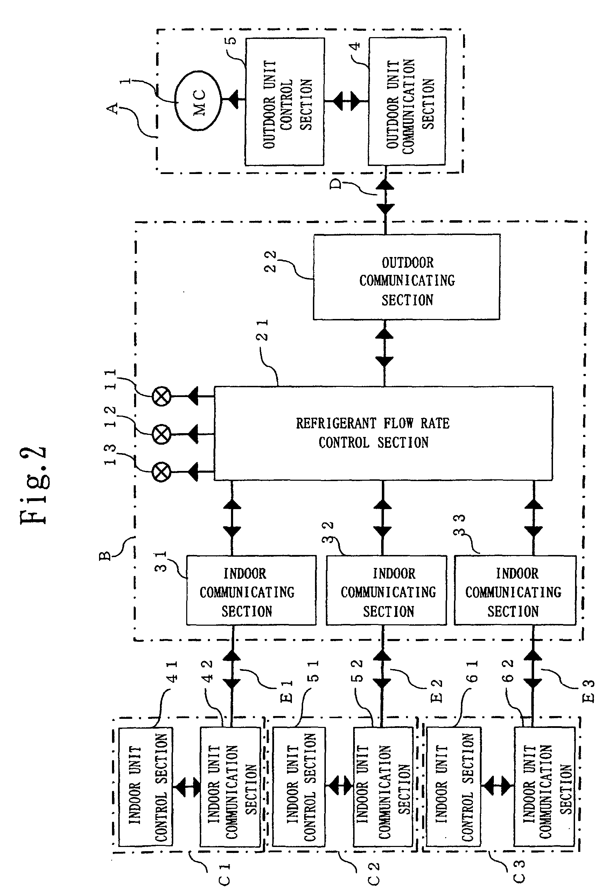

Fig. 2 shows a control mechanism of the multiple-unit air conditioner according to the first embodiment.

With referring to Fig. 2, a reference sign A denotes an outdoor unit which is designed for multiple-unit system. A reference sign B denotes a refrigerant flow rate control unit. Reference signs C1, C2, C3 denote indoor units which are designed for one-to-one system. A reference sign D denotes communication between the outdoor unit and the refrigerant flow rate control unit. Reference signs E1, E2, E3 denote communication between the respective indoor units and the refrigerant flow rate control unit. A reference numeral 1 denotes a compressor, a reference numeral 4 denotes an outdoor unit communication section, which is a means of communication of the outdoor unit. A reference numeral 5 denotes an outdoor unit control section, which controls such as the compressor in the outdoor unit. Reference numerals 11, 12, 13 denote flow regulators. A reference numeral 21 denotes a refrigerant flow rate control section, which controls the operating frequency of the compressor in the outdoor unit and the flow rate of refrigerant to be supplied to the respective indoor units based on the operating information of the indoor units. A reference numeral 22 denotes an outdoor communicating section, through which the refrigerant flow rate control unit communicates information with the outdoor unit. Reference numerals 31, 32, 33 denote indoor communicating sections, through which the refrigerant flow rate control unit communicates information with the respective indoor units. Reference numerals 41, 51, 61 denote indoor unit control sections, which control the respective indoor units. Reference numerals 42, 52, 62 denote indoor unit communication sections, which are means of communication of the respective indoor units.

The operating information of each indoor unit C1, C2, C3 is collected by the indoor unit control section 41, 51, 61, respectively. The operating information is then transmitted to the refrigerant flow rate control unit B through communication E1, E2, E3 between the indoor unit communication section 42, 52, 62 in each indoor unit and the indoor communicating section 31, 32, 33, respectively, in the refrigerant flow rate control unit.

Based also upon the operating information of each indoor unit C1, C2, C3 obtained through communication E1, E2, E3, the refrigerant flow rate control section 21 in the indoor refrigerant flow rate control unit B determines a target operating frequency of the compressor 1 in the outdoor unit A and a target aperture of the flow regulator 11, 12, 13.

Then, based upon the target aperture determined above of the flow regulator 11, 12, 13, the refrigerant flow rate control section 21 controls the flow rate of refrigerant for distribution.

Then, the target operating frequency determined above of the compressor 1 is transmitted to the outdoor unit A through the commination D between the outdoor communicating section 22 in the refrigerant flow rate control unit B and the outdoor unit communication section 4 in the outdoor unit.

Then, based upon the target operating frequency of the compressor 1 obtained through communication D, the outdoor unit control section 5 in the outdoor unit controls the operating frequency of the compressor 1.

With further reference to Fig. 2, the outdoor communicating section 22 and the indoor communicating sections 31, 32, 33 in the refrigerant flow rate control unit are independent of each other. This allows the system configuration which includes different types of means of communication, in such a case as to use the means of communication designed for multiple-unit system for communication D between the outdoor unit A and the refrigerant flow rate control unit B and the means of communication designed for one-to-one system for communication E1, E2, E3 between each indoor unit C1, C2, C3 and the refrigerant flow rate control unit B.

As described above, one of the characteristic of the air conditioner according to this embodiment is to include the outdoor unit designed for multiple-unit system which is equipped with the volume controllable compressor, the refrigerant flow rate control unit connected to the outdoor unit, and the single or multiple indoor units designed for one-to-one system which are connected to the refrigerant flow rate control unit. The outdoor unit and the indoor units are provided with no flow regulators. The refrigerant flow rate control unit is equipped with a means of communication with each indoor unit and a flow regulator for each indoor unit. Then, the refrigerant flow rate control unit collects the operating information of each indoor unit and then controls the flow of refrigerant for distribution to each indoor unit at an appropriate rate. The refrigerant flow rate control unit is also equipped with a means of communication with the outdoor unit and then controls the operating frequency of the compressor in the outdoor unit to supply all the indoor units with refrigerant at a flow rate required.

Another characteristic of the air conditioner according to this embodiment may be described as follows. The outdoor unit is provided with a means of communication designed for multiple-unit system, and the indoor units are provided with a means of communication designed for one-to-one system. Then, the refrigerant control unit is provided with the different types of means of communication, i.e., one designed for multiple-unit system for communication with the outdoor unit and the other for one-to-one system for communication with the indoor units.

### Embodiment 2.

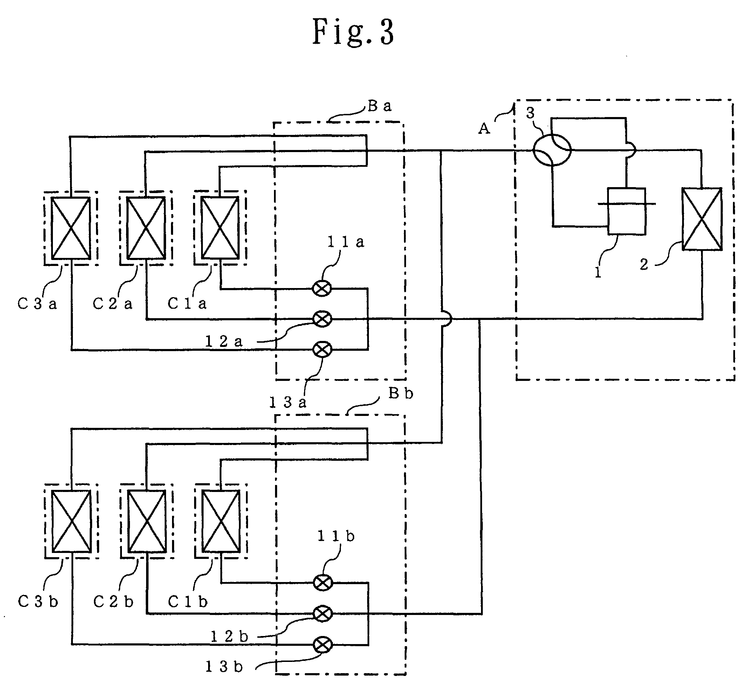

Fig. 3 is a simplified illustration of a system configuration of an air conditioner according to a second embodiment.

With referring to Fig. 3, a reference sign A denotes an outdoor unit designed for multiple-unit system, reference sings Ba, Bb denote refrigerant flow rate control units, and reference signs C1a, C2a, C3a, C1b, C2b, C3b denote indoor units designed for one-to-one system. A reference numeral 1 denotes a compressor which is capable of controlling the volume of refrigerant to be supplied to the indoor units. A reference numeral 2 denotes a heat exchanger in the outdoor unit. A reference numeral 3 denotes a four-way valve. Reference signs 11a, 12a, 13a, 11b, 12b, 13b denote flow regulators.

The outdoor unit A and the indoor units C1a, C2a, C3a, C1b, C2b, C3b are equipped with no flow regulators. The flow rate of refrigerant for distribution to the respective indoor units C1a, C2a, C3a, C1b, C2b, C3b is controlled by the flow regulators equipped in the refrigerant flow rate control units Ba, Bb.

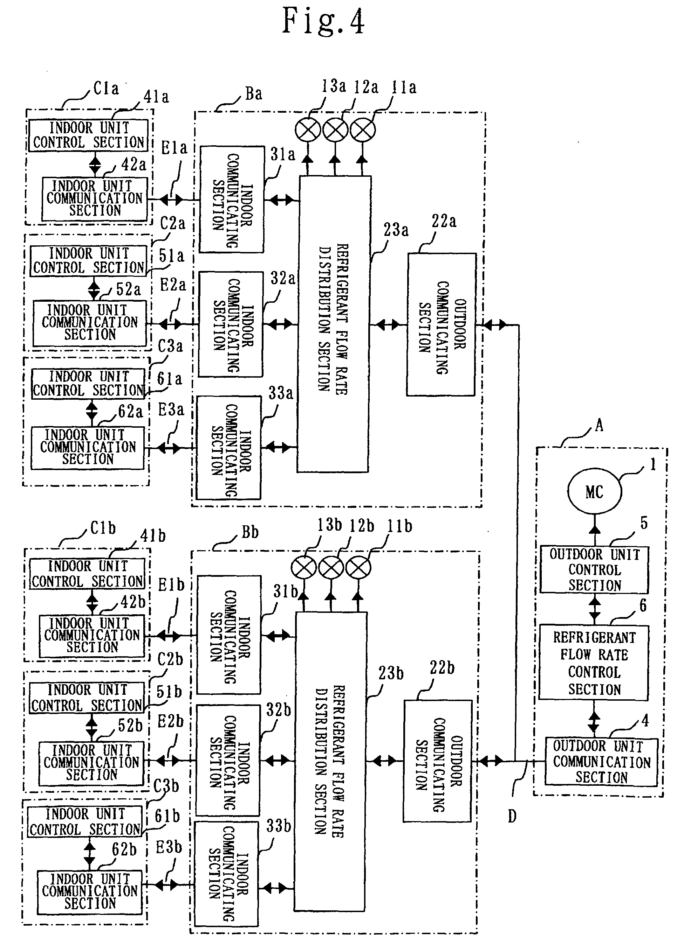

Fig. 4 shows a control mechanism of the air conditioner according to the second embodiment.

With referring to Fig. 4, a reference sign A denotes an outdoor unit designed for multiple-unit system, reference sings Ba, Bb denote refrigerant flow rate control units, and reference signs C1a, C2a, C3a, C1b, C2b, C3b denote indoor units designed for one-to-one system. A reference sign D denotes communication between the outdoor unit and the refrigerant flow rate control unit. Reference signs E1a, E2a, E3a, E1b, E2b, E3b denote communication between the respective indoor units and the refrigerant flow rate control unit. A reference numeral 1 denotes a compressor. A reference numeral 4 denotes an outdoor unit communication section which is a means of communication of the outdoor unit. A reference numeral 5 denotes an outdoor unit control section, which controls such as the compressor in the outdoor unit. A reference numeral 6 denotes a refrigerant flow rate control section, which controls the operating frequency of the compressor in the outdoor unit and the flow rate of refrigerant to be supplied to each indoor unit based upon the operating information of the indoor unit. Reference signs 11a, 12a, 13a, 11b, 12b, 13b denote flow regulators. Reference signs 23a, 23b denote refrigerant flow rate distribution sections. Reference signs 22a, 22b denote outdoor communicating sections, through which the refrigerant flow rate control unit communicates information with the outdoor unit. Reference signs 31a, 32a, 33a, 31b, 32b, 33b denote indoor communicating sections, through which the refrigerant flow rate control unit communicates information with the respective indoor units. Reference signs 41a, 51a, 61a, 41b, 51b, 61b denote indoor unit control section, which control the respective indoor units. Reference signs 42a, 52a, 62a, 42b, 52b, 62b denote indoor unit communication sections, which are means of communication of the respective indoor units.

The operating information of each indoor unit C1a, C2a, C3a, C1b, C2b, C3b is collected by the indoor unit control section 41a, 51a, 61a, 41b, 51b, 61b, respectively. The operating information is then transmitted to the respective refrigerant flow rate control units Ba, Bb through communication E1a, E2a, E3a, E1b, E2b, E3b between the indoor unit control sections 42a, 52a, 62a, 42b, 52b, 62b in the indoor units and the indoor communicating sections 31a, 32a, 33a, 31b, 32b, 33b in the refrigerant flow rate control units Ba, Bb, respectively.

The operating information of each indoor unit C1a, C2a, C3a, C1b, C2b, C3b obtained through communication E1a, E2a, E3a, E1b, E2b, E3b is also transmitted to the outdoor unit A through communication D between the outdoor communicating sections 22a, 22b in the refrigerant flow rate control units Ba, Bb and the outdoor unit communication section 4 in the outdoor unit, respectively.

Then, based on the operating information of each indoor unit C1a, C2a, C3a, C1b, C2b, C3b obtained through communication D, the refrigerant flow rate control section 6 determines a target operating frequency of the compressor 1 and a target flow rate of refrigerant for distribution to the respective refrigerant flow rate control units Ba, Bb.

Then, based upon the target operating frequency of the compressor 1 determined above, the outdoor unit control section 5 controls the operating frequency of the compressor 1.

Then, the target flow rate of refrigerant determined above for distribution to be supplied to the respective refrigerant flow rate control units Ba, Bb is transmitted to the respective refrigerant flow rate control units Ba, Bb through communication D between the outdoor unit communication section 4 in the outdoor unit and the outdoor communicating section 22a, 22b in the refrigerant flow rate control unit Ba, Bb, respectively.

Then, based on the target flow rate of refrigerant, obtained through communication D, for distribution to be supplied to the respective refrigerant flow rate control units Ba, Bb, the refrigerant flow rate distribution section 23a, 23b determines a target aperture of each flow regulator 11a, 12a, 13a, 11b, 12b, 13b to control the flow rate of refrigerant for distribution.

It is to be noted that the target aperture may thus be determined by the refrigerant flow rate distributing sections 23a, 23b. However, it may alternatively be determined by the refrigerant flow rate control section 6 and transmitted to the respective refrigerant flow rate control units Ba, Bb through communication D.

With further reference to Fig. 4, the outdoor communicating sections 22a, 22b in the refrigerant flow rate control unit and the indoor communicating sections 31a, 32a, 33a, 31b, 32b, 33b are independent of each other. This allows the system configuration which includes different types of means of communication, in such a case as to use a means of communication designed for multiple-unit system for communication D between the outdoor unit A and the refrigerant flow rate control unit B and a means of communication designed for one-to-one system for communication E1, E2, E3 between each indoor unit C1, C2, C3 and the refrigerant flow rate control unit B.

As described above, one of the air conditioner according to this embodiment is to include the outdoor unit designed for multiple-unit system which is equipped with the volume controllable compressor, the refrigerant flow rate control unit connected to the outdoor unit, and the single or multiple indoor units designed for one-to-one system which are connected to the refrigerant flow rate control unit. The outdoor unit and the indoor units are equipped with no flow regulators. The respective refrigerant flow rate control units transmit to the outdoor unit the operating information of each indoor unit connected. Then, the outdoor unit controls the operating frequency of the compressor based upon the operating information of each indoor unit received from the respective refrigerant flow rate control units. In addition, the outdoor unit transmits to each refrigerant flow rate control unit the volume of refrigerant for distribution according to the air conditioning performance required. Then, each refrigerant flow rate control unit further distributes and controls the volume of refrigerant for distribution received from the outdoor unit to the respective indoor units connected.

### Embodiment 3.

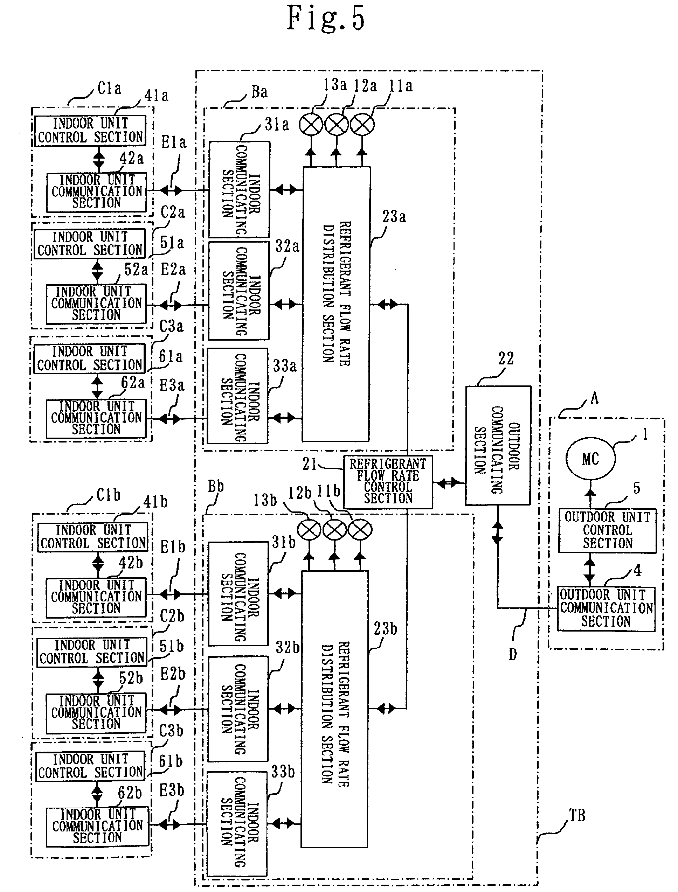

Fig. 5 shows a control mechanism of an air conditioner according to a third embodiment. The simplified illustration of the system configuration thereof is the same as that of Fig. 3 according to the second embodiment.

The refrigerant flow rate control section 21 obtains the operating information from the indoor units, and determines the target operating frequency of the compressor 1 and the target flow rate of refrigerant for distribution to the respective refrigerant flow rate control units Ba and Bb based upon the operating information obtained. The target operating frequency is then transmitted to the outdoor unit A through communication D. The target aperture of each flow regulator 11a, 12a, 13a, 11b, 12b, 13b may be determined by the refrigerant flow rate control section 21. However, it may alternatively be determined by the refrigerant flow rate distributing sections 23a, 23b.

Elements shown in Fig. 3 other than those described above are the same as those described in the second embodiment, and therefore will not be described here.

### Embodiment 4.

Through the first to third embodiments described above, the air conditioners each include the outdoor unit designed for multiple-unit system and the indoor units designed for one-to-one system. However, that is not a must.

The air conditioner may be equipped with an outdoor unit designed for one-to-one system and indoor units designed for multiple-unit system, instead.

Furthermore, one of the characteristics of the air conditioner of this invention is in its applicability to the case where the outdoor unit uses one communication system and the indoor unit uses another. Therefore, assuming that there are a first communication system and a second communication system which uses a communication procedure different from that used by the first communication system, another characteristic may be described as follows. The air conditioner includes an outdoor unit which uses the first communication system and an indoor unit which uses the second communication system. Then, the outdoor communicating section of the refrigerant flow rate control unit uses the communication procedure designed for the first communication system, and the indoor communicating section of the refrigerant flow rate control unit uses the communication procedure designed for the second communication system. Therefore, the refrigerant flow rate control unit is allowed to communicate both with the indoor unit communication section and the outdoor unit communication section. Another characteristic is that the refrigerant flow rate control unit is equipped with the flow regulators for the indoor units, respectively. Thus, the flow rate of refrigerator is controlled by the flow regulators for distribution to the respective indoor units.

### Industrial Applicability

According to the preferred embodiments of the present invention, the use of existing indoor units designed for one-to-one system is allowed in the air conditioner which includes the outdoor unit designed for multiple-unit system which is equipped with the volume controllable compressor, the refrigerator flow rate control unit connected to the outdoor unit, and at least one of the indoor units connected to the refrigerant flow rate control unit. Hence, the multiple-unit air conditioner may be implemented at low cost.

Furthermore, even with the outdoor unit equipped with a means of communication designed for multiple-unit system and the indoor unit equipped with a means of communication designed for one-to-one system, the air conditioner may be implemented at low cost if the refrigerant flow rate control unit is provided with two different types of means of communication, i.e., one designed for multiple-unit system for communicating with the outdoor unit and the other designed for one-to-one system for communicating with the indoor units.

## Claims

1. An air conditioner comprising:
at least one indoor unit;
an outdoor unit, which controls a flow rate of refrigerant to be supplied to the indoor unit; and
a refrigerant flow rate control unit, which controls the outdoor unit and the indoor unit;
wherein the refrigerant flow rate control unit includes,
an indoor communicating section, which communicates information with the indoor unit,
an outdoor communicating section, which communicates information with the outdoor unit,
at least one flow regulator, which regulates the flow rate of refrigerant to be supplied to the indoor unit, and
a refrigerant flow rate control section, which obtains an operating status of the indoor unit through the indoor communicating section, generates refrigerant flow rate information about the flow rate of refrigerant to be supplied to the indoor unit based on the operating status, controls the flow regulator based on the refrigerant flow rate information, and notifies the outdoor unit of the refrigerant flow rate information through the outdoor communicating section, and
wherein the outdoor unit controls the flow rate of refrigerant based on the refrigerant flow rate information.

2. The air conditioner according to claim 1, wherein the outdoor unit is designed for multiple-unit system in which a single outdoor unit deals with a plurality of indoor units, and
wherein the indoor unit is designed for one-to-one system in which a single outdoor unit deals with a single indoor unit.

3. The air conditioner according to claim 2, wherein the outdoor unit is provided with an outdoor unit communication section which is designed for the multiple-unit system,
wherein the indoor unit is provided with an indoor unit communication section which is designed for the one-to-one system,
wherein the outdoor communicating section is provided with a communication procedure for the outdoor unit communication section, and
wherein the indoor communicating section is provided with a communication procedure for the indoor unit communication section.

4. The air conditioner according to claim 1, further comprising:
a plurality of indoor units; and
a plurality of flow regulators provided for the plurality of indoor units,
wherein the refrigerant flow rate control unit obtains the operating status of each of the indoor units through the indoor communicating section, determines the flow rate of refrigerant to be distributed to the each of the indoor units based on the operating status obtained of the each of the indoor units, and controls the plurality of flow regulators based on the flow rate of refrigerant determined.

5. The air conditioner according to claim 1, wherein the outdoor unit is provided with a first system communication section, which uses a first communication system,
wherein the indoor unit is provided with a second system communication section, which uses a second communication system, which uses a system different from a system used by the first communication system,
wherein the outdoor communicating section is provided with a communication procedure designed for the first system communication section, and
wherein the indoor communicating section is provided with a communication procedure designed for the second system communication section.

6. An air conditioner comprising:
an outdoor unit, which is equipped with a compressor for controlling a flow rate of refrigerant;
a plurality of refrigerant flow rate control units connected to the outdoor unit; and
a plurality of indoor units, each of which is connected to one of the plurality of refrigerant flow rate control units,
wherein the outdoor unit obtains operating information of the plurality of indoor units through the plurality of refrigerant flow rate control units, controls the compressor based on the operating information obtained, generates distribution information about a flow rate of refrigerant to be supplied to the plurality of refrigerant flow rate control units, and notifies the plurality of refrigerant flow rate control units of the distribution information, and
wherein the plurality of refrigerant flow rate control units includes,
a plurality of flow regulators for regulating a flow rate of refrigerant to be supplied to the plurality of indoor units, and
a refrigerant flow rate distribution section for receiving the distribution information from the outdoor unit, and controlling the plurality of flow regulators based on the distribution information.

7. The air conditioner according to claim 6, wherein the outdoor unit is provided with an outdoor unit communication section designed for multiple-unit system,
wherein the plurality of indoor units is provided with a plurality of indoor unit communication sections designed for one-to-one system, and
wherein the plurality of refrigerant flow rate control units includes,
at least one outdoor communicating section, which is provided with a communication procedure for communicating with the outdoor unit communication section, and
at least one indoor communicating section, which is provided with a communication procedure for communicating with the plurality of indoor communicating sections.
